# NEUE EUROPÄISCHE PATENTSCHRIFT

(11) **EP 0 562 417 B2**
(45) Veröffentlichungstag und Bekanntmachung des Hinweises auf die Entscheidung über den Einspruch: **21.05.2003**
(45) Hinweis auf die Patenterteilung: 03.09.1997
(21) Anmeldenummer: 93104223.8
(22) Anmeldetag: 16.03.1993
(51) Int. Cl.: B65G 1/02, B65G 1/20

(54) **Gestell zum Lagern von flächigen Werkstücken**
Rack for storing flat work pieces
Etagère pour stocker des pièces à usiner plates

(30) Priorität: 24.03.1992 DE 9203901 U
(43) Veröffentlichungstag der Anmeldung: 29.09.1993
(73) Patentinhaber: MTS Maschinenbau GmbH, 88512 Mengen (DE)
(72) Erfinder: Schoeller, Heinz, W-7703 Rielasingen (DE)
(74) Vertreter: Weiss, Peter, Dr. rer.nat.

(56) Entgegenhaltungen:
- WO-A-93/01999
- AT-B- 387 199
- FR-A- 2 551 727
- US-A- 2 837 787
- US-A- 4 113 110

## Beschreibung

Die Erfindung betrifft ein Gestell zum Lagern von flächigen Werkstücken, beispielsweise von durch Pressen hergestellte Teile eines Automobils, aus einzelnen Stapelsäulen, welche bewegbare Klinken aufweisen, die in einem Stapelprofil angeordnet sind.

Derartige Gestelle sind beispielweise aus der DE-OS 38 11 310 oder der DE-OS 40 20 864 bekannt Wesentlich ist dabei, daß durch das Einlegen eines flächigen Werkstückes gleichzeitig die nachfolgende Klinke in eine Position gebracht wird, in der sie das nächste Werkstück aufnehmen kann. Diese Gestelle werden für sehr viele Teile beispielsweise eines Austomobils benutzt. Eingelagert werden Kofferraumdeckel, Motorhauben, Seitenverkleidungen, Dachteile, sonstige Chassisteile usw.

Die Stapelsäulen für ein derartiges Gestell sollten zum einen sehr stabil gebaut sein, da sie häufig, beispielsweise von Hubstaplern, angefahren werden. Ferner müssen sie aber eine gleichbleibende vertikale Ausrichtung und einen gleichbleibenden Abstand voneinander aufweisen, damit einzulagernde Teile ordnungsgemäß auf den Klinken aufgenommen werden können. Deswegen gestaltet sich der Aufbau eines derartigen Gestells an Ort und Stelle sehr schwierig und zeitaufwendig, da die einzelnen Stapelsäulen genau ausgerichtet werden müssen. Bereits eine Abweichung im Millimeterbereich beim Aufsetzen auf einen Untergrund bewirkt eine Abweichung im Zentimeterbereich im oberen Teil der Stapelsäulen. Vor allem wesentlich ist die Neigung von sich mit ihren Klinken gegenüberliegenden Stapelsäulen zueinander. In der Regel benötigt der Aufbau eines derartigen Gestells ebensoviel Zeit wie die Herstellung des gesamten Gestells.

Der vorliegenden Erfindung liegt die Aufgabe zugrunde, diese Nachteile zu beseitigen und insbesondere ein Gestell zu schaffen, welches einfach aufstellbar und ausrichtbar ist und welches unempfindlich gegen Beschädigungen ist.

Zur Lösung dieser Aufgabe führt, daß das Stapelprofil mit einem Schutzprofil lösbar verbunden ist, welches an zumindest einer Gestellaußenseite des Stapelprofils angeordnet ist, wobei das Stapelprofil gegenüber dem feststehenden Schutzprofil bewegbar ist.

Auf diese Weise ist das eigentliche Stapelprofil nicht mehr einem Angriff von beispielsweise einem Hubstapler ausgesetzt, sondern wird von einem Schutzprofil geschützt. Ferner ist dieses Stapelprofil gegenüber dem Schutzprofil in seiner Lage veränderbar, so daß nach Festlegung des Schutzprofils auf einem Untergrund eine Justage erfolgen kann, welche auf sehr einfache Art und Weise geschieht.

Bevorzugt ist das Schutzprofil als Winkel oder U-förmig ausgebildet, wobei das Stapelprofil von diesem U-Profil ummantelt ist, d.h. das Stapelprofil sitzt in dem Schutzprofil. Die Ummantelung erfolgt zur Gestellaußenseite hin, da hier vor allem ein häufiges Anfahren durch Hubstapler geschieht.

Bevorzugt kann dieses Schutzprofil nunmehr aus relativ dickem Material bestehen, welches zu einem entsprechenden Profil geformt ist. Die Wahl eines dikkeren Materials für das Stapelprofil bot sich in der Vergangenheit nicht an, da in dieses Stapelprofil eine Vielzahl von Löcher zur Aufnahme von Klinkenachsen od. dgl. eingeformt werden mußten. Dies geschah in der Regel durch Ausstanzen in einem einzigen Arbeitsgang. Hätte man ein dickeres Blech für das Stapelprofil gewählt, so wäre die Herstellung derartiger Lölcher nur durch eine Vielzahl von Bohrvorgängen möglich gewesen, was sehr zeitaufwendig und kostenintensiv ist.

Gemäß der vorliegenden Erfindung kann für das eigentliche Stapelprofil ein relativ dünner Werkstoff bzw. ein dünnes Blech gewählt werden, während das eigentliche Schutzprofil sehr wandstark ausgebildet ist und damit einen guten Schutz bildet.

Bevorzugt besteht das Schutzprofil aus einem Winkelprofil mit zur Gestellaußenseite weisendem Schenkel und Rückwand. Diese beiden Teile müssen wandstark ausgebildet sein, da sie dem Angriff von außen her ausgesetzt sind. Um das U-förmige Profil zu vollenden, ist diesem Winkelprofil parallel zu dem eben genannten Schenkel ein Blechstreifen angelegt, der wiederum dünner ausgebildet sein kann, da er im Gestell selber liegt und so nicht einem Angriff von außen her ausgesetzt ist. Hierdurch kann Material eingespart werden. Zusätzliches Material wird dann noch beim Stapelprofil selber eingespart, so daß insgesamt der Materialmehraufwand für das Schutzprofil relativ gering ist. Diese Aufwendung wird im übrigen bei weitem von der Kosteneinsparung für die Herstellung des Stapelprofils ausgeglichen, da nunmehr sämtliche Öffnungen des Stapelprofils durch Stanzen hergestellt werden können.

Das Stapelprofil ist bevorzugt an dem eben genannten Blechstreifen lösbar befestigt. Die lösbare Befestigung bewirkt, daß das Stapelprofil im Verhältnis zum Schutzprofil gekippt werden kann. Dementsprechend ist auch die Befestigung ausgelegt. Hier sind viele Variationen denkbar und sollen vom vorliegenden Erfindungsgedanken umfaßt sein. Beispielsweise kann in den Blechstreifen ein Langloch eingeformt sein, wobei die Verbindung von Stapelprofil und Schutzprofil über einen Schraubenbolzen geschieht, der in diesem Langloch, welches etwa waagerecht verläuft, gleitet. Hierdurch können gegenüberliegende Stapelprofile in ihrem Abstand zueinander genau eingestellt werden. Ein Klinkenabstand ist dann innerhalb eines Gestells von oben nach unten gleichbleibend. Das Einstellen geschieht auf sehr einfache Weise, indem lediglich an das Stapelprofil eine,entsprechende Wasserwaage angelegt wird und dieses Stapel- profil sich genau im Wasser befindet.

In einem Ausführungsbeispiel kann ein einziges Langloch mit Schraubenbolzen genügen, während das Stapelprofil andererseits über ein Drehgelenk festliegt. Bevorzugt befindet sich aber zumindest oben und unten in dem Schutzprofil jeweils ein Langloch, so daß auch der Abstand zweier Stapelprofile zueinander verändert werden kann.

Es ist selbstverständlich auch möglich, daß sich das Langloch im Stapelprofil befindet. Ferner sind auch andere aufwendigere Befestigungsmöglichkeiten denbar, durch die das Stapelprofil im Verhältnis zum Schutzprofil lageverändert werden kann.

Ein wesentlicher Vorteil dieser Anordnung ist auch, daß das Stapelprofil in dem Schutzprofil ausgetauscht werden kann. Wird beispielsweise ein anderer Klinkenabstand gewünscht, so ist es möglich, eine Stapelsäule mit diesem Klinkenabstand gegen die gerade benutzte Stapelsäule auszutauschen, ohne daß eine Veränderung des Schutzprofils vorgenommen werden muß.

Bevorzugt sitzt das Schutzprofil auf einer Grundplatte auf und ist auf dieser festgelegt. Diese Grundplatte wird dann für dip Herstellung des Gestells grob einnivelliert, die exakte Justage der Stapelprofile zueinander erfolgt jedoch durch Lösen der Verbindung zwischen Stapel- profil und Schutzprofil und durch ein Kippen des Stapelprofils im Verhältnis zum Schutzprofil.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 eine perspektivische Ansicht eines erfindungsgemäßen Gestells zum Lagern von flächenförmigen Werkstücken;
Fig. 2 eine Seitenansicht einer erfindungsgemäßen Stapelsäule für ein Gestell gem. Fig. 1;
Fig. 3 einen Querschnitt durch die Stapelsäule gem. Fig. 2 entlang Linie III - III.

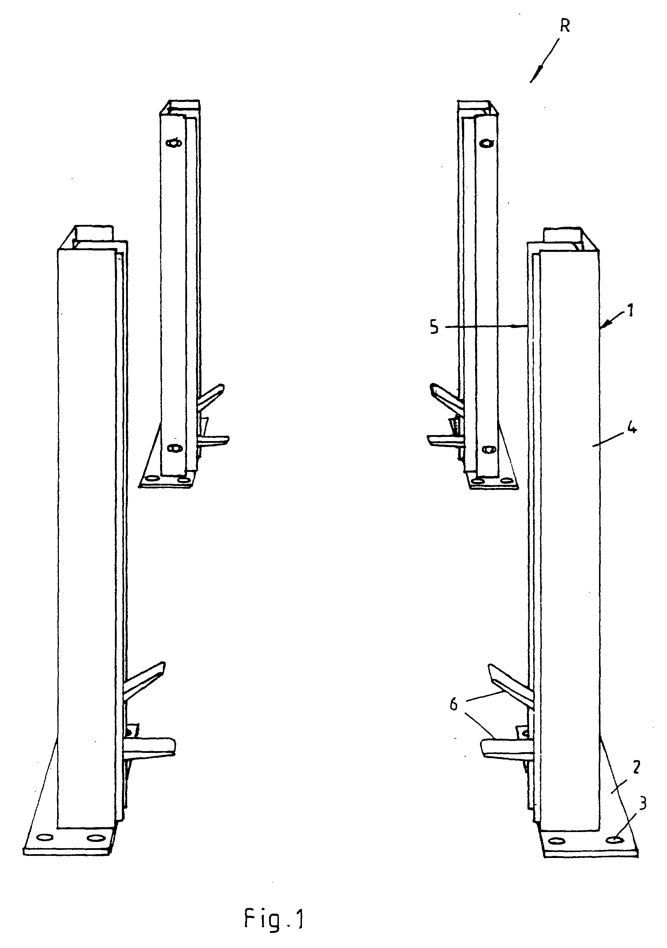

Ein Gestell R zum Lagern von insbesondere flächenförmigen Werkstücken, wie beispielsweise Autoteilen, weist gem Fig. 1 im vorliegenden Ausführungsbeispiel vier Stapelsäulen 1 auf. Jede Stapelsäule 1 ist mit einer Grundplatte 2 versehen, welche Bohrungen 3 zum Festlegen auf einem Untergrund, Tragplatte, Tragprofil od. dgl. besitzt.

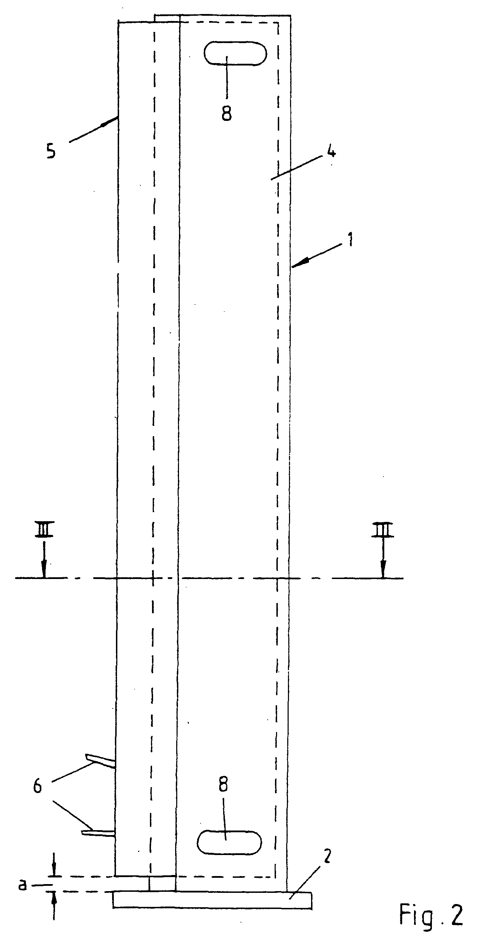

Auf der Grundplatte 2 befindet sich erfindungsgemäß ein Schutzprofil 4, welches mit der Grundplatte 2 in der Regel durch Schweißnähte verbunden sein dürfte. In diesem Schutzprofil 4 ist ein eigentliches Stapelprofil 5 angeordnet, in welchem sich auch Klinken 6 zum Halten der flächenförmigen Werkstücke befinden, wobei diese Klinken 6 beispielsweise in der DE - OS 40 20 864 beschrieben sind. Gem. Fig. 2 ist erkennbar, daß das Stapelprofil 5 von der Grundplatte 2 einen Abstand a aufweist, dies muß jedoch nicht sein. Es ist auch denkbar, daß das Stapelprofil 5 lediglich auf der Grundplatte 2 aufsteht. In jedem Fall ist aber das Stapelprofil 5 nicht mit der Grundplatte 2 verbunden.

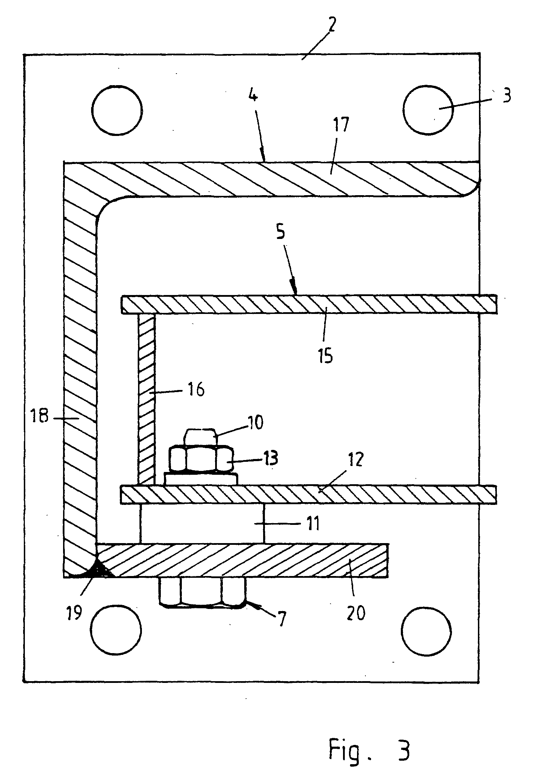

Dagegen weist das Stapelprofil 5 eine lösbare Verbindung mit dem Schutzprofil 4 auf. Diese lösbare Verbindung erfolgt in dem Ausführungsbeispiel gem. Fig. 2 und 3 über einen Schraubenbolzen 7, der ein Langloch 8 in dem Schutzprofil 4 durchgreift. Dabei schlägt ein Schraubenkopf 9 von außen her an das Schutzprofil 4 an, während ein Gewindeabschnitt 10 das Langloch 8 durchquert, sodann eine Distanzhülse 11 sowie eine Seitenwand 12 des Stapelprofils 5 durchgreift und andererseits über eine Mutter 13 festgelegt ist, welche auf eine Unterlegscheibe 14 drückt.

Da diese Anordnung bei einer Stapelsäule sowohl oben als auch nahe der Grundplatte 2 vorgesehen ist, kann eine Verstellung des Stapelprofils 5 im Verhälnis zum Schutzprofil 4 erfolgen. Dies geschieht durch Lösen der entsprechenden Schraubverbindung, wobei nach dem Lösen der Schraubverbindung das Stapelprofil 5 mehr oder weniger gegenüber dem Schutzprofil 4 gekippt werden kann.

Das Stapelprofil 5 besteht im übrigen in bekannter Weise aus zwei Seitenwänden 12 und 15, welche etwa parallel verlaufen und miteinander durch eine Rückwand 16 verbunden sind. Hierdurch wird ein U-förmiges Profil ausgebildet, zwischen welchem sich die o.g. Klinken 6 bewegen können.

Das Schutzprofil 4 weist bevorzugt ein senkrecht angeordnetes Winkelprofil aus einem Schenkel 17 und einer Rückwand 18 auf. Etwa parallel zum Schenkel 17 ist an der Rückwand 18 durch eine Schweißnaht 19 ein Blechstreifen 20 festgelegt, an dem das Stapelprofil 5 über die o.g. Schraubverbindung festgelegt wird.

## Patentansprüche

1. Gestell zum Lagern von flächigen Werkstücken, beispielweise von durch Pressen hergestellte Teile eines Automobils, aus einzelnen Stapelsäulen (1), welche bewegbare Klinken (6) aufweisen, die in einem Stapelprofil (5) angeordnet sind,
**dadurch gekennzeichnet,**
**daß** das Stapelprofil (5) mit einem Schutzprofil (4) lösbar verbunden ist, wobei das Stapelprofil (5) gegenüber dem feststehenden Schutzprofil (4) bewegbar ist.

2. Gestell nach Anspruch 1, **dadurch gekennzeichnet, daß** das Schutzprofil (4) als Winkel oder U-förmig ausgebildet ist, wobei das Stapelprofil (5) in dieses U-Profil lösbar eingesetzt ist.

3. Gestell nach Anspruch 2, **dadurch gekennzeichnet, daß** das Schutzprofil (4) aus einem Winkelprofil mit zur Gestellaußenseite weisendem Schenkel (17) und Rückwand (18) sowie einem etwa Parallel zum Schenkel (17) verlaufenden Blechstreifen (20) besteht, wobei das Stapelprofil (5) an dem Blechstreifen (20) lösbar festgelegt ist.

4. Gestell nach Anspruch 3, **dadurch gekennzeichnet, daß** das Winkelprofil (17, 18) aus stärkerem Material besteht als der Blechstreifen (20).

5. Gestell nach Anspruch 3 oder 4, **dadurch gekennzeichnet, daß** sich in dem Blechstreifen (20) zumindest ein Langloch (8) befindet, welches von einem Schraubenbolzen (7) durchsetzt ist, der das Stapelprofil (5) lösbar an dem Schutzprofil (4) festlegt.

6. Gestell nach Anspruch 5, **dadurch gekennzeichnet, daß** zumindest zwei Langlöcher (8) beabstandet vorgesehen sind, welche von entsprechenden Schraubenbolzen (7) durchquert sind.

7. Gestell nach Anspruch 5 oder 6, **dadurch gekennzeichnet, daß** der Schraubenbolzen (7) noch eine Distanzhülse (11) zwischen Schutzprofil (4) und Stapelprofil (5) durchgreift.

8. Gestell nach wenigstens einem der Ansprüche 1 bis 7, **dadurch gekennzeichnet, daß** das Schutzprofil (4) auf einer Grundplatte (2) festgelegt ist.

## Claims

1. Frame, formed from individual stacking columns (1), for the storage of flat workpieces, for example parts of an automobile produced by presses, said stacking columns having displaceable pawls (6) which are disposed in a stacking profile (5), **characterised in that** the stacking profile (5) is detachably connected to a protective profile (4), the stacking profile (5) being displaceable relative to the stationary protective profile (4).

2. Frame according to claim 1, **characterised in that** the protective profile (4) has an angular or U-shaped configuration, the stacking profile (5) being detachably inserted in this U-shaped profile.

3. Frame according to claim 2, **characterised in that** the protective profile (4) comprises an angular profile having a flange (17) and rear wall (18) directed towards the outside of the frame, as well as a sheet metal strip (20) extending substantially parallel to the flange (17), the stacking profile (5) being detachably secured to the sheet metal strip (20).

4. Frame according to claim 3, **characterised in that** the angular profile (17, 18) is formed from stronger material than the sheet metal strip (20).

5. Frame according to claim 3 or 4, **characterised in that** there is at least one elongate slot (8) in the sheet metal strip (20), which slot is penetrated by a threaded bolt (7) which secures the stacking profile (5) to the protective profile (4) in a detachable manner.

6. Frame according to claim 5, **characterised in that** at least two elongate slots (8) are provided, with a spacing therebetween, said slots being traversed by corresponding threaded bolts (7).

7. Frame according to claim 5 or 6, **characterised in that** the threaded bolt (7) also extends through a spacer sleeve (11) between protective profile (4) and stacking profile (5).

8. Frame according to at least one of claims 1 to 7, **characterised in that** the protective profile (4) is secured on a base plate (2).

## Revendications

1. Étagère pour stocker des pièces plates, par exemple des pièces d'une d'automobiles fabriquées par pressage, constituée de colonnes d'empilage (1) distinctes, équipées de cliquets (6) mobiles montés dans un profilé d'empilage (5),
**caractérisée en ce que**
le profilé d'empilage (5) est relié de manière amovible à un profilé de protection (4), le profilé d'empilage (5) étant mobile par rapport au profilé de protection (4) fixe.

2. Etagère selon la revendication 1,
**caractérisée en ce que**
le profilé de protection (4) a une section angulaire ou en U, à l'intérieur de laquelle le profilé d'empilage (5) est monté de manière amovible.

3. Etagère selon la revendication 2,
**caractérisée en ce que**
le profilé de protection (4) est un profilé angulaire constitué d'une aile (17) dirigée vers l'extérieur de l'étagère, d'une paroi arrière (18) ainsi que d'une bande tôle (20) parallèle à l'aile (17), le profilé d'empilage (5) pouvant être fixé de manière amovible sur la bande de tôle (20).

4. Etagère selon la revendication 3,
**caractérisée en ce que**
le profilé angulaire (17, 18) est fait d'un matériau plus épais que la bande de tôle (20).

5. Etagère selon la revendication 3 ou 4,
**caractérisée en ce que**
la bande de tôle (20) est percée d'au moins une boutonnière (8) que traverse un boulon fileté (7) qui fixe le profilé d'empilage (5) sur le profilé de protection (4) de manière amovible.

6. Etagère selon la revendication 5,
**caractérisée en ce qu'**
elle comporte au moins deux boutonnières (8) espacées, traversées par des boulons filetés correspondants (7).

7. Etagère selon la revendication 5 ou 6,
**caractérisée en ce que**
le boulon fileté (7) traverse également une douille d'espacement (17) située entre le profilé de protection (4) et le profilé d'empilage (5).

8. Etagère selon au moins une des revendications 1 à 7,
**caractérisée en ce que**
le profilé de protection (4) est fixé sur une plaque de base (2).
